Europäisches Patentamt

European Patent Office

Office européen des brevets

(19)

(11) **EP 0 689 644 B1**

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(21) Anmeldenummer: **93908261.6**

(22) Anmeldetag: **16.04.1993**

(51) Int Cl.⁶: **F03G 3/00**

(86) Internationale Anmeldenummer:
**PCT/SK93/00003**

(87) Internationale Veröffentlichungsnummer:
**WO 94/21916 (29.09.1994 Gazette 1994/22)**

(54) **VORRICHTUNG MIT ANTRIEBSEINHEIT ZUM UEBERTRAGEN VON ENERGIE**

DEVICE FOR TRANSMITTING ENERGY WITH DRIVING UNIT

DISPOSITIF POUR TRANSMETTRE DE L'ENERGIE AVEC UNITE D'ENTRAINEMENT

(84) Benannte Vertragsstaaten:
**AT DE FR GB IT SE**

(30) Priorität: **15.03.1993 SK 20793**

(43) Veröffentlichungstag der Anmeldung:
**03.01.1996 Patentblatt 1996/01**

(73) Patentinhaber: **LAMBDA, GmbH**
**921 01 Piestany (SK)**

(72) Erfinder: **LOPASKA, Ladislav**
**921 01 Piestany (SK)**

(74) Vertreter: **Jeck, Anton, Dipl.-Ing.**
**Jeck Fleck Herrmann**
**Patentanwälte**
**Postfach 14 69**
**71657 Vaihingen/Enz (DE)**

(56) Entgegenhaltungen:
EP-A- 0 498 136          DE-U- 8 803 907

**Beschreibung**

Fachgebiet der Erfindung:

Die Erfindung betrifft eine Einrichtung zur Nutzung von Antriebs- und gegenläufigen Momenten rotierender oder linearer Motoren, die auf dem Umfang von Schwungrädern angebracht sind, und das unter Zusammenwirken des Gewichtes oder der Zentrifugalkraft.

Charakteristik des derzeitigen Standes der Technik:

Alle Typen von Antriebseinheiten, beispielsweise Elektromotoren, Explosionsmotoren, Hydromotoren, pneumatische Motoren usw. arbeiten so, dass das auf der Welle übertragene Antriebsmoment die Leistung auf die Arbeitseinrichtung direkt über die Kuplung überträgt. Bei stationären Einrichtungen ist das gegenläufige Moment in den Fundamenten eingefangen, in die die Einrichtung eingebaut ist. In mobilen Einrichtungen ist das gegenläufige Moment durch das Gewicht der mobilen Einrichtung ausgewogen. In allen diesen Einrichtungen ist die Leistung der Antriebseinheiten direkt auf die Arbeitsmaschine übertragen. In Spezialfällen wurden keine nähren Lösung gefunden, als die Lösungen nach den tschechoslowakischen Patenten Nr. 122423, 139446, 139751 und AO 160382. Diese betreffen aber nicht das Gebiet unserer Erfindung. Auch weitere, ausländische Schriften WO 85/04139, DE 2947369/A1, die die Problematik der Kräftigung des Antriebs von einem etwas anderen Standpunkt lösen, oder die Antriebskraft direkt ableiten, sind kein Hindernis für unsere Lösung. Der Nachteil der derzeitigen Antriebseinheiten ist, dass sie nur das Antriebsmoment mit den dazu gehörigen Umdrehungen nutzen. Zu den weiteren Nachteilen gehört: ein hoher Brennstoffverbrauch, seine ökologische Schädlichkeit, seine niedrige Effizienz, usw.

Erklärung des Vesens der Erfindung und ihrer Vorteile:

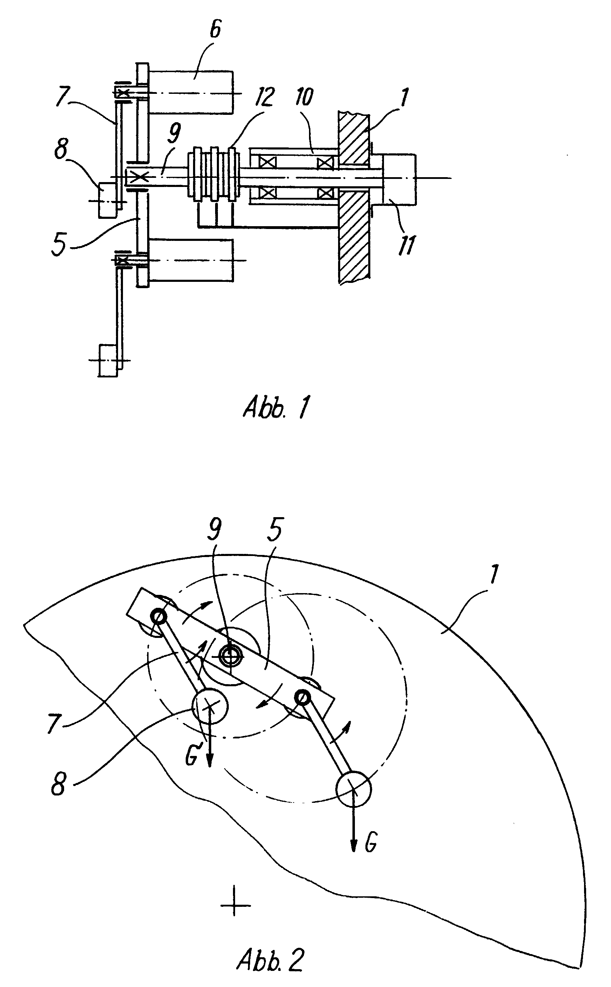

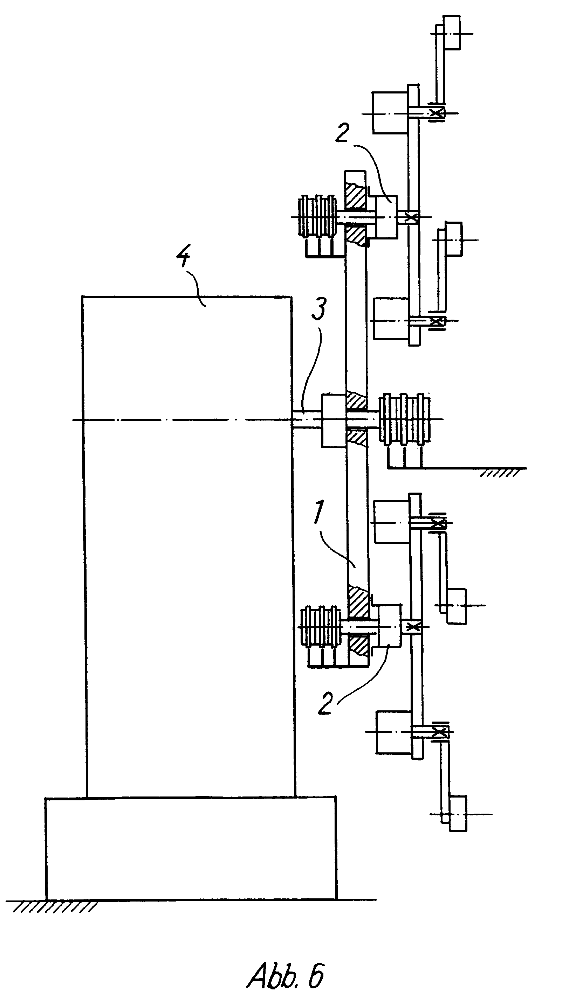

Der Multiplikator kinetischer Energie mit Antriebseinheit (Abb.6) wird durch ein Schwundgrad gebildet, das auf der Velle 3 der Arbeitsmaschine befestigt ist.
An seinem Umfang sind Antriebseinheiten 2 (Abb. 5,6) angebracht die die Eigenschaften von sich drehenden Einrichtungen haben (Abb. 1). Es sind dies eigentlich Rotationsmotoren, ihre Antriebs-und gegenläufigen Momente,die beim Zusammenwirken beide Typen von Momenten ausbilden, umändern, - das Antriebs- und auch das gegenläufige; in ein einheitliches, absolutes Moment, das die Bedingungen für einen freien Vektor erfüllt -, ein Moment eines Kraftpaares, das wir in der Ebene beliebig verschieben oder aufdrehen können. Das Kraftpaarmoment, gebildet durch die Antriebseinheit 2 wird auf den Multiplikator der kinetischen Energie 1 mittels der Bremse 11 (Abb. 1) übertragen. Diese sichert die stufenweise Andrehung des Multiplikators der kinetischen Energie 1, der eine beträchtliche Menge kinetischer Energie akkumuliert. Bei erhöhten Umdrehungen beginnen wir die gebildete Leistung zu entnehmen. Die angeführte Art und Weise ermöglicht uns, den Virkungsgrad drehbarer Einrichtungen 6 (Abb. 1) beträchtlich zu erhöhen.

Erklärung der Zeichnungen:

Beispiel der Durchführung der Erfindung ist auf den beiliegenden Zeichnungen abgebildet, wo

Abb. 1    die Antriebseinheit im Schnitt zeigt,
Abb. 2    die Antriebseinheit in der Ansicht zeigt,
Abb. 3    den Beweis der Funktionsfähigkeit der Antriebseinheit bei Mitwirkung des Gewichtes zeigt,
Abb. 4    den Beweis der Funktionsfähigkeit der Antriebseinheit bei Mitwirkung der Zentrifugalkraft zeigt,
Abb. 5    den Multiplikator der kinetischen Energie zeigt, mit der Anordnung der Antriebseinheiten,
Abb. 6    den Multiplikator der kinetischen Energie mit den Antriebseinheiten zeigt.

Beispiel für die Realisierung der Erfindung:

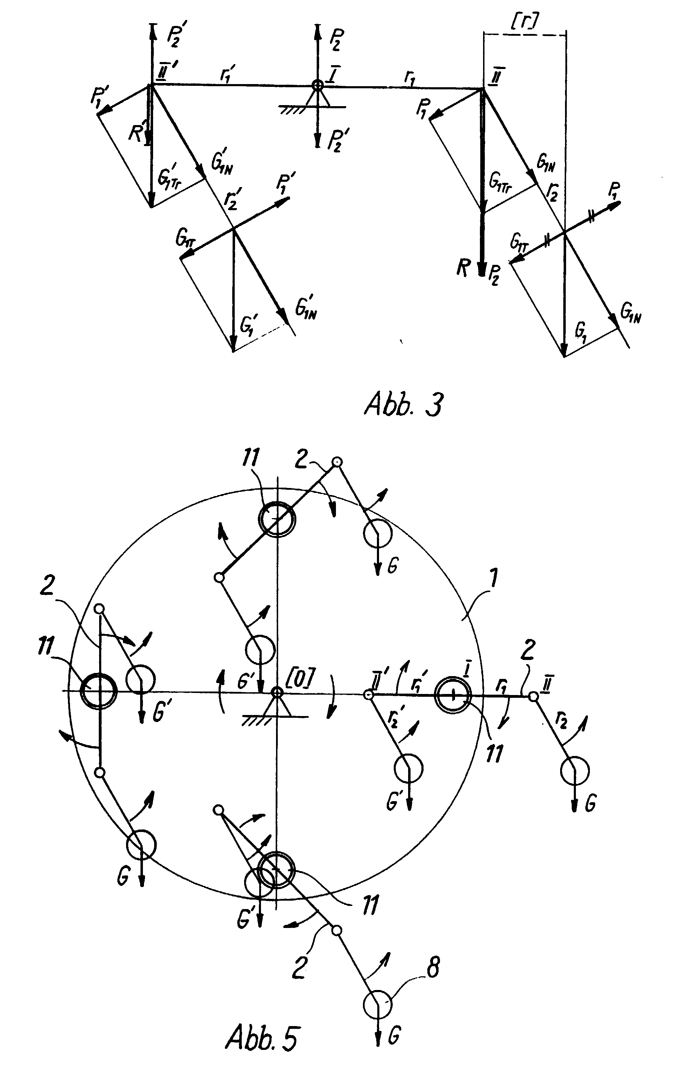

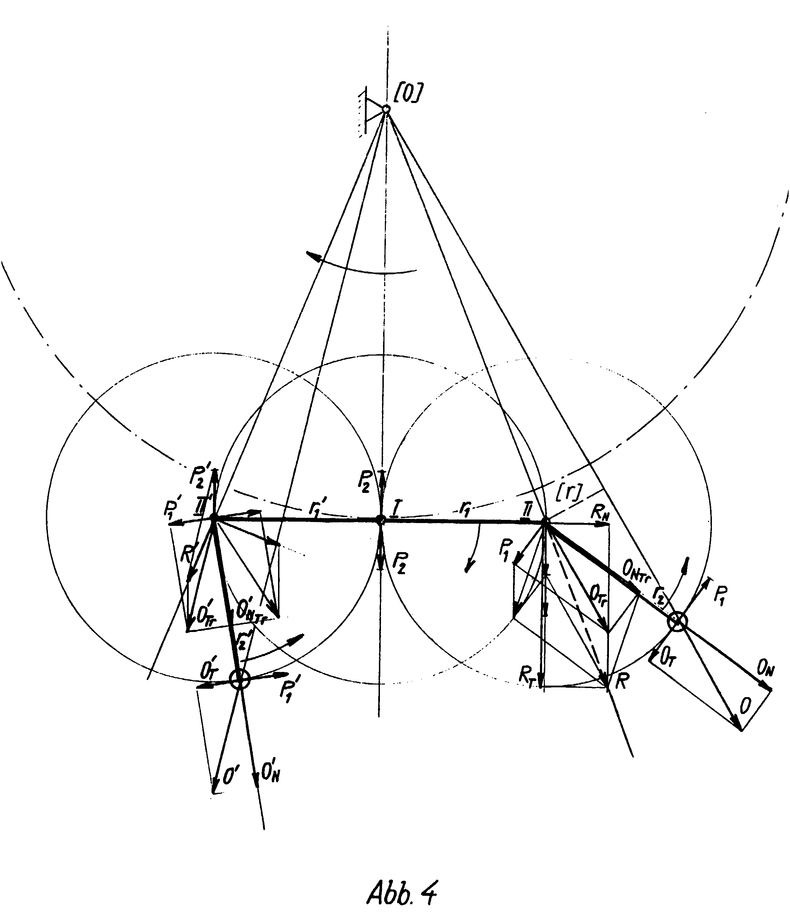

Der Gegenstand der Erfindung besteht aus einem Multiplikator der kinetischen Energie 1, an welchem die Antriebseinheiten 2 (Abb. 5 und 6) angebracht sind. Der Multiplikator der kinetischen Energie 1 ist ein Schwungrad, das auf der Velle 3 der Arbeitsmaschine 4 (Abb. 6) befestigt ist. Am Multiplikator der kinetischen Energie 1 sind am Umfang die Antriebseinheiten 2 angebracht die aus dem drehbaren Arm der Antriebseinheit 5 bestehen, an welchem die drehbaren Einrichtungen 6 (Abb. 1,2,5) befestigt sind. Am Antriebsteil der drehbaren Einrichtung 6 ist der Arm 7 mit dem Gewicht 8 (Abb. 1) fest angebracht (Abb. 1). Der drehbare Arm der Betriebseinheit 5 ist an der Velle 9 der Antriebseinheit 2 im Lager 10 angebracht, das am Multiplikator der kinetischen Energie 1 in der Bremse 11 befestig ist. Die Zuleitung der elektrischen Energie in die drehbare Einrichtung 6 wird mittels der Sammelringe 12 (Abb. 1,2,5,6) realisiert. Die Einrichtung arbeitet folgendermassen:
Die Verschiebung des Virkungspunktes des Gewichtes "G" (der Kraft "0") in den Umdrehungspunkt II/II (Abb. 3,4,5) wird nach den Gesetzen der Mechanik realisiert: Es ist möglich, die Kraft am Körper in ein anderes Virkungsfeld gleichmässig umzuleiten, durch den Anschluss eines Paares, dessen Moment dem Produkt der gegebenen Kraft und ihrer Entfernung vom neuen Virkungspunkt II/II gleich ist.

Praktisches Beispiel für die Bildung eines freien Vektors eines Kraftpaares, das absolute Moment geht aus der Abb. 3 hervor

Die drehbare Einrichtung 6 untergebracht im Punkt II, II' hat das Drehmoment

$$M_t = G_1 \cdot [r] = P_1 \cdot r_2 = 9\,557 \frac{N}{n} = P_2 \cdot r_1$$

Es entsteht ein Paar gleich grosser Antriebs- und gegenläufiger Kräfte

| | |
|---|---|
| Moment $P_1 \cdot r_2$ | Antriebsmoment |
| Moment $P_2 \cdot r_1$ | Gegenläufiges Moment |
| $G_1$ | Gewicht 8 Abb. 3,4 |
| 0 | zentrifugales Gewicht 8 Abb. 5 |
| [r] | Entfernung vom Drehpunkt II/II' an der Verbindungslinie 0;II oder senkrechte Entfernung des Gewichtes "G" auf den Drehpunkt II, (II') |

$9\,557 \frac{N}{n} = M_t$ der verwendeten Dreheinrichtung 6

Bei der Transformierung des Gewichtes "$G_1$" vom Ende des Armes -$r_2$-; ($r_2$') in den Drehpunkt II, (II') wird folgendermassen verfahren:

- vektorenmassig werden die Gewichte $G_1$ ($G_1$') in die Richtung des Armes -$r_2$ - "$G_{IN}$ " und in die Richtung der Tangente zum Arm -$r_2$- "$G_{IT}$" zerlegt

$$G_{IN} = G_1 \cos$$

$$G_{IT} = G_1 \sin = P_1$$

Das Moment $P_1 \cdot r_2$, gebildet durch das Antriebsmoment, zusammen mit dem gegenläufigen Moment $P_2 \cdot r_1$ transformieren uns das Gewicht $G_1$ in den Drehpunkt II der angegebenen Einrichtung so, dass sich

- $G_1$ mit der Kraft $P_1$ aufhebt (vom Antriebsmoment)
- $G_{IN}$ in die Dreheinrichtung verschoben wird; Punkt II.

Die zweite Seite des Paares von Kräften des angeführten Moments $P_2 \cdot r_1$ wird mit der verschobenen Komponente $G_{IN}$ zusammengezählt. Vir erhalten das transformierte $G_{1tr}$. Das gegenläufige Moment $P_2 \cdot r_1$, das dem Antriebsmoment gleich ist (weil $r_1 = r_2$)

$P_1 \cdot r_2$ wird im Punkt II mit $G_{1tr}$ addiert

$$R = G_{1tr} + P_2$$

Moment der Resultierenden

$$M_{tr} = R \cdot r_1$$

Ähnlich ist es auf der anderen Seite

$$R = G_{1tr} - P_2$$

$$M_{tR} = R \cdot r_1$$

Das resultierende Moment

$$M_{tv} = M_{tR} + M_{tR'}$$

$$M_{tv} = 2M_{tR}$$

Die Drehungen der drehbaren Einrichtung 6 sind gleich den Drehungen der Antriebseinheit 2 (Abb. 1,6).
Die Summe der Leistungen am Eintritt ist gleich der Leistung am Austritt, verkürzt durch die Verluste durch Reibung. Die Rotationsbewegung ist schon zur Rotationsbewegung ohne Reaktion, d.i. zur absoluten Bewegung transformiert, (ein Momentpaar - ohne Reaktion). Die drehbare Einrichtung 6 (Abb. 1) kann ein Elektrkromotor, Elektromotor mit Schaltgetriebe, Hydromotor, pneumatischer Motor, oder deren Kombination sein.

Praktisches Beispiel für die Nutzung des Multiplikators kinetischer Energie mit Antriebseinheit (Abb. 5,6)

Über den Umfang des Multiplikators kinetischer Energie 1 können ein bis "n" Paar Betriebseinheiten 2 angebracht werden. Die Betriebseinheit 2 arbeitet, wie in der Beschreibung auf Abb. 1,2,3 und 4 angegeben. Sie rotiert um den Punkt "1" in der Bremse 11 mit den Umdrehungen der Betriebs- Dreheinrichtung 6 und überträgt den freien Vektor (das absolute Moment), das Moment des Kraftpaares, das die Antriebseinheit 2 auf den Multiplikator der kinetischen Energie 1 ausübt.
Die Bremse 11 kann mechanisch, elektrisch, hydraulisch, pneumatisch oder kombiniert sein.
Die Kraftpaare die auf den Multiplikator der kinetischen Energie 1, wirken, haben kolineare Vektoren und wir können sie deshalb algebraisch addieren

$$M_v = M_1 + M_2 + \ldots\ldots + M_n$$

| | |
|---|---|
| $M_v$ | resultierendes Moment der Antriebseinheiten 2 (Abb. 6) der Dreheinrichtung 6 (Abb. 1,2). |
| $M_v =$ | $9\,557 \frac{N_v}{n_1}$ |
| $N_v$ | Σ der Leistungen der Dreheinrichtungen 6 |

$n_1$    Umdrehungen der Dreheinrichtung <u>6</u>

Der Multiplikator der kinetischen Energie hat das Trägheitsmoment

$$M_z = \frac{I_Q \cdot \varphi}{g} = I_m \cdot \varphi$$

$I_Q$    Trägheitsmoment des Gewichtes
$I_m$    Trägheitsmoment der Masse
$\varphi$    Vinkelbeschleunigung der Umdrehung des Schwungrades Die Beschleunigung des Multiplikators der kinetischen Energie - des Schwungrades <u>1</u> berechnen wir aus dem Vergleich

$$M_v = M_z$$

$$9\,557\,\frac{N_v}{n_1} = I_m \cdot \varphi$$

$$\varphi = \frac{M_v}{I_m}$$

Nach der Versetzung des Multiplikators der kinetischen Energie <u>1</u> in optimale Drehbewegung

$$\omega_z = \varphi \cdot t$$

$\omega_z$ Winkelgeschwindigkeit des Schwungrades wächst uns die akkumulierte kinetische Energie mit dem linearen Anwachsen der Zeit "t"

$$K = \frac{1}{2} \cdot I_m \cdot \omega_z^2 = \frac{1}{2} \cdot I_m \cdot \varphi^2 \cdot t^2$$

Leistungsfähigkeit der Einrichtung

$$\eta = \frac{N_z}{N_v} \qquad N_v = \frac{M_v \cdot n_1}{9\,557}$$

$$\eta = \frac{M_z \cdot n_z}{M_v \cdot n_1} \qquad N_z = \frac{I_m \varphi^2 \cdot t}{102} = \frac{I_m \cdot \varphi \cdot 102}{9\,557}$$

Das erwähnte System ermöglicht es, die Leistung der Einrichtungen beträchtlich zu erhöhen.

<u>Art und Weise der industriellen Ausnutzbarkeit der Erfindung:</u>

Die Einrichtungen-Multiplikatoren laut Anmeldung der Erfindung, kann man auf verschiedenen Gebieten des wirtschaftlichen Lebens nutzen. Es ist möglich, die Multiplikatoren auch bei der Erzeugung elektrischer Energie und für den Antrieb mobiler Einrichtungen zu verwenden.

**Patentansprüche**

1.    Vorrichtung zum Übertragen von Energie mit Antriebseinheit, **gekennzeichnet** dadurch, dass sie ein Schwungrad bildet, das an der Welle (3) einer Arbeitsmaschine (4) angebracht ist, an dessen Umfang Arbeitseinheiten (2) befestigt sind, die aus einem drehbaren Arm einer Antriebseinheit (5) bestehen, an welchem drehbare Einrichtungen angebracht sind (6).

2.    Vorrichtung nach Anspruch 1, gekennzeichnet dadurch, dass auf der drehbaren Einrichtung (6) ein Arm (7) mit einem Gewicht fest angebracht ist.

3.    Vorrichtung nach Anspruch 1 und 2, gekennzeichnet dadurch, dass der drehbare Arm der Antriebseinheit (5) an der Welle (9) der Antriebseinheit (2) befestigt ist und zwar im Lager (10), das in der Bremse (11) vorgesehen ist.

**Claims**

1.    Apparatus for transmitting energy, having a driving unit, characterised in that it forms a flywheel which is mounted on the shaft (3) of a production machine (4), driving units (2) being secured on the circumference of said apparatus and comprising a rotatable arm (5) of a driving unit, on which arm (5) rotatable means (6) are mounted.

2.    Apparatus according to claim 1, characterised in that an arm (7), provided with a weight, is securedly mounted on the rotatable means (6).

3.    Apparatus according to claims 1 and 2, characterised in that the rotatable arm (5) of the driving unit is secured on the shaft (9) of the driving unit (2), that is to say in the bearing (10), which is provided in the brake (11).

**Revendications**

1.    Dispositif pour transmettre de l'énergie avec unité d'entraînement, caractérisé en ce qu'il constitue un volant, qui est monté sur l'arbre (3) d'une machine de travail (4), volant au pourtour duquel sont fixées des unités de travail (2), qui sont constituées d'un bras rotatif d'une unité d'entraînement (5), bras auquel sont fixés des dispositifs rotatifs (6).

2.   Dispositif suivant la revendication 1, caractérisé en ce que sur le dispositif rotatif (6) est monté rigidement un bras (7) portant un poids (8).

3.   Dispositif suivant la revendication 1 ou 2, caractérisé en ce que le bras rotatif de l'unité d'entraînement (5) est fixé à l'arbre (9) de l'unité d'entraînement (2), et cela dans le palier (10) qui est prévu dans le frein (1).

Abb. 1

Abb. 2

Abb. 3

Abb. 5

7

Abb. 4

Abb. 6